# EUROPÄISCHE PATENTANMELDUNG

(11) **EP 3 988 750 A1**
(43) Veröffentlichungstag der Anmeldung: **27.04.2022**
(21) Anmeldenummer: 21203399.7
(22) Anmeldetag: 19.10.2021
(51) Int. Cl.: E05D 3/02, B60R 1/06, E05D 5/02, E05D 11/10

(54) **ARBEITSMASCHINE MIT EINER FAHRERKABINE**

(30) Priorität: 22.10.2020 DE 102020127865
(71) Anmelder: Liebherr-Werk Bischofshofen GmbH, 5500 Bischofshofen (AT)
(72) Erfinder: PRÄAUER, Johann, 5600 St. Johann im Pongau (AT); STRUBREITER, Tobias, 5440 Golling (AT)
(74) Vertreter: Herrmann, Uwe

(57) **Zusammenfassung**

Die vorliegende Erfindung betrifft eine Arbeitsmaschine mit einer Fahrerkabine, die eine Kabinentür aufweist, die um ein Türscharnier schwenkbar angeordnet ist, wobei an der Fahrerkabine unmittelbar oder mittelbar eine Spiegelstange mit einem Spiegel und/oder ein Handlauf angeordnet ist, wobei an der Fahrerkabine des Weiteren ein Multifunktionshalteteil angeordnet ist, das eine erste Scharnieranordnung aufweist, die eine erste Drehachse definiert, wobei die Kabinentür mittels der ersten Scharnieranordnung verschwenkbar ist, und das eine zweite Scharnieranordnung aufweist, die eine zweite Drehachse definiert, wobei die Spiegelstange mittels der zweiten Scharnieranordnung verschwenkbar ist, und/oder dass an dem Multifunktionshalteteil der Handlauf angeordnet ist.

## Beschreibung

Die vorliegende Erfindung betrifft eine Arbeitsmaschine, insbesondere einen Radlader, mit einer Fahrerkabine, die eine Kabinentür aufweist, die um ein Türscharnier schwenkbar angeordnet ist, wobei an der Fahrerkabine eine Spiegelstange mit einem Spiegel und/oder ein Handlauf angeordnet ist.

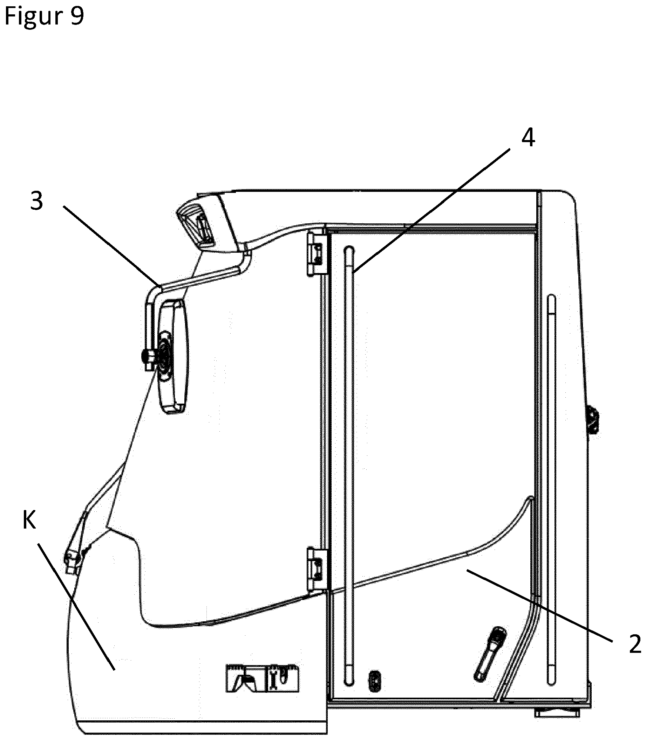

Eine derartige Arbeitsmaschine ist aus dem Stand der Technik bekannt. Ein Beispiel für eine solche Arbeitsmaschine ist in Figur 9 dargestellt.

Figur 9 zeigt in einer perspektivischen Ansicht eine Fahrerkabine K eines Radladers. An der Fahrerkabine K ist mittels zweier Scharnieranordnungen die Kabinentür 2 angelenkt. An dieser befindet sich der Handlauf 4, der dem Fahrer das Einsteigen und Austeigen in die bzw. aus der Fahrerkabine K erleichtert. An der Fahrerkabine K befindet sich des Weiteren eine Spiegelstange 3 mit einem daran angeordneten Rückspiegel, wobei die Spiegelstange 3 um einen Drehpunkt an der Fahrerkabine K verschwenkbar ist.

Der vorliegenden Erfindung liegt die Aufgabe zugrunde, eine Arbeitsmaschine der eingangs genannten Art dahingehend weiterzubilden, dass sich gegenüber einer bekannten Arbeitsmaschine Material- und Montageeinsparungen ergeben.

Diese Aufgabe wird durch eine Arbeitsmaschine mit den Merkmalen des Anspruchs 1 gelöst.

Danach ist vorgesehen, dass an der Fahrerkabine ein Multifunktionshalteteil angeordnet ist,
das eine erste Scharnieranordnung aufweist, die eine erste Drehachse definiert, wobei die Kabinentür mittels der ersten Scharnieranordnung um das Multifunktionshalteteil verschwenkbar ist und
das eine zweite Scharnieranordnung aufweist, die eine zweite Drehachse definiert, wobei die Spiegelstange mittels der zweiten Scharnieranordnung um das Multifunktionshalteteil verschwenkbar ist und/oder dass an dem Multifunktionshalteteil der Handlauf angeordnet ist.

Erfindungsgemäß wird somit ein mit der Fahrerkabine verbundenes Multifunktionshalteteil eingesetzt, das eine erste Scharnieranordnung aufweist, mittels derer die Kabinentür schwenkbar an der Fahrerkabine angeordnet ist. Darüber hinaus befindet sich an dem Multifunktionshalteteil eine zweite Scharnieranordnung, mittels derer die Spiegelstange relativ zu der Fahrerkabine verschwenkbar ist und/oder der Handlauf.

Das oder die Multifunktionshalteteile können sich an der rechten und/oder linken Seite der Fahrerkabine (im Folgenden auch als Kabine bezeichnet) befinden.

Das Multifunktionshalteteil kann mit der Fahrerkabine lösbar oder unlösbar verbunden sein. Es kann beispielsweise einen integralen, d.h. einstückigen Teil der Fahrerkabine bilden.

Das Multifunktionshalteteil weist erfindungsgemäß mehrere Funktionalitäten auf, nämlich die schwenkbare Fixierung der Kabinentür sowie die schwenkbare Fixierung der Spiegelstange und/oder des Handlaufs. Dadurch ergibt sich gegenüber der in Figur 9 gezeigten bekannten Anordnung eine Materialeinsparung und eine Verringerung des Montageaufwands. Eine separate Anordnung der Spiegelstange, der Kabinentür und des Handlaufs sind nicht erforderlich, vielmehr erfolgt deren gemeinsame Anordnung mittels des Multifunktionshalteteils.

In einer besonders bevorzugten Ausführung ist vorgesehen, dass der Handlauf und die Spiegelstange ein gemeinsames Teil bilden, das um die zweite Drehachse verschwenkbar ist. Anders als bei der aus dem Stand der Technik bekannten Ausführung sind somit Handlauf und Spiegelstange (mit daran angeordnetem Spiegel) ein gemeinsames Teil.

Denkbar ist es, dass die Spiegelstange einen C-förmigen Abschnitt aufweist, dessen offene Seite zu der Fahrerkabine hin gewandt ist. An diesem C-förmigen Abschnitt ist der Rückspiegel für den Fahrer angeordnet. Die Schenkel des C-förmigen Abschnitts verlaufen vorzugsweise horizontal, der sich zwischen den Schenkeln befindliche Abschnitt vorzugsweise vertikal.

In einer weiteren Ausführung reicht der Handlauf bis zu einer bestimmten Höhe der Kabinentür, vorzugsweise bis mindestens zu einer Normhöhe (vorzugsweise ISO 2867) der Kabinentür. Nach oben hin geht dieser in die weiter oben verlaufende Spiegelstange über. Der untere Abschnitt der gemeinsamen Stange bildet somit den Handlauf, der obere Abschnitt die Spiegelstange.

Vorzugsweise sind an der Fahrerkabine ein erstes und ein zweites Multifunktionshalteteil angeordnet, die in Höhenrichtung voneinander beabstandet sind und die beide eine erste Scharnieranordnung aufweisen sowie eine zweite Scharnieranordnung und/oder die beide den Handlauf halten.

Vorzugsweise verlaufen die erste Drehachse und die zweite Drehachse zueinander parallel oder im Wesentlichen parallel und/oder sind voneinander beabstandet.

Um die Spiegelstange und somit auch den Spiegel in einer durch en Nutzer eingestellten Vorzugsposition zu halten, ist vorzugsweise vorgesehen, dass das Multifunktionshalteteil eine erste Rastung und die Spiegelstange oder ein damit verbundenes Anbindungsteil eine zweite Rastung aufweisen, die ineinander eingreifen. Das Rastprofil kann beispielsweise als Sägezahn-Verzahnung oder auch anderweitig ausgebildet sein.

Weiterhin kann eine Feder mit einer Gegenverschraubung vorgesehen sein, die derart angeordnet und ausgebildet ist, dass der Widerstand, um den die zweite relativ zu der ersten Rastung bewegbar ist, verstellbar ist.

Es kann ein Anschlag vorgesehen sein, der angeordnet ist, um die Verstellung der Spiegelstange zu begrenzen. Entsprechendes kann alternativ oder zusätzlich für den Handlauf und/oder die Bewegung der Kabinentür gelten.

In oder an dem Multifunktionshalteteil kann eine Feder, insbesondere eine Torsionsfeder angeordnet sein, um nach einer Entriegelung der Kabinentür diese in den geöffneten Zustand zu überführen. Auf eine Gasfeder kann somit verzichtet werden.

Vorzugsweise ist die Spiegelstange und/oder der Handlauf an wenigstens zwei Punkten angeordnet, die in Höhenrichtung der Fahrerkabine voneinander beabstandet sind, wodurch die Spiegelstange und/oder der Handlauf eine besonders gute und stabile Anordnung erhalten.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weitere Einzelheiten und Vorteile der Erfindung werden anhand eines in der Zeichnung dargestellten Ausführungsbeispiels näher erläutert.

Es zeigen:
- Figur 1:: eine Seitenansicht auf die Fahrerkabine einer Arbeitsmaschine gemäß der Erfindung mit einer oberen Scharnieranordnung und mit einer unteren Scharnieranordnung,
- Figur 2:: eine Schnittansicht durch die obere Scharnieranordnung gemäß Figur 1,
- Figur 3:: eine Seitenansicht auf die untere Scharnieranordnung gemäß Figur 1,
- Figur 4:: eine perspektivische Ansicht der oberen Scharnieranordnung gemäß Figur 1,
- Figur 5:: eine perspektivische Ansicht des Anbindungsteils der Spiegelstange,
- Figur 6:: eine perspektivische Ansicht des Multifunktionshalteteils,
- Figur 7:: eine Schnittansicht durch das Multifunktionshalteteil gemäß Figur 6,
- Figur 8:: eine Schnittansicht durch die obere Scharnieranordnung gemäß Figur 1 und
- Figur 9:: eine perspektivische Ansicht auf eine Fahrerkabine einer Arbeitsmaschine gemäß dem Stand der Technik.

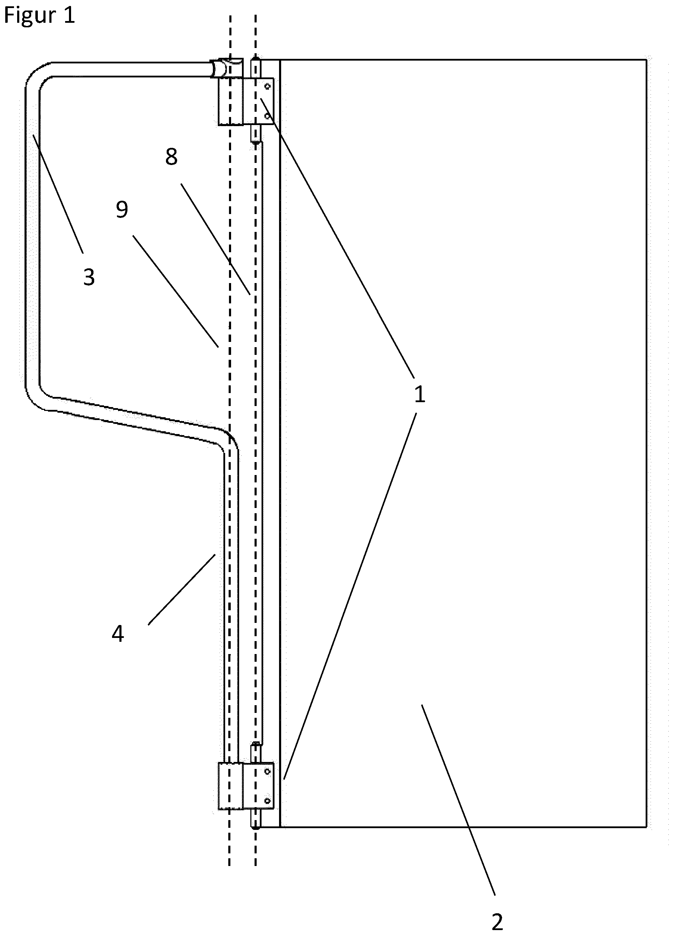

Figur 1 zeigt eine Seitenansicht auf die Kabinentür 2 einer Arbeitsmaschine gemäß der vorliegenden Erfindung.

Bei der erfindungsgemäßen Arbeitsmaschine handelt es sich vorzugsweise um einen Radlader, jedoch sind auch andere Arbeits- bzw. Baumaschinen umfasst.

Das Bezugszeichen 1 kennzeichnet ein oberes und ein unteres Multifunktionshalteteil, das ortsfest an der Fahrerkabine der Arbeitsmaschine fixiert ist, beispielsweise durch eine Schraub- oder Schweißverbindung.

Jedes der Multifunktionshalteteile 1 weist eine erste und eine zweite Scharnieranordnung auf.

Die erste Scharnieranordnung steht mit der Kabinentür 2 derart in Verbindung, dass die Kabinentür 2 um die erste Scharnieranordnung verschwenkt und somit geöffnet und geschlossen werden kann.

Die erste Scharnieranordnung definiert eine erste Drehachse 8, die die Drehachse der Tür 2 bildet.

Die zweite Scharnieranordnung steht mit der Spiegelstange 3 und mit dem Handlauf 4 in Verbindung.

Die zweite Scharnieranordnung definiert eine zweite Drehachse 9, die zu der ersten Drehachse 8 parallel verläuft und die die Drehachse der Spiegelstange 3 und somit auch des Handlaufs 4 bildet.

Die Spiegelstange 3 weist einen C-förmig gebogenen Abschnitt auf, wie dies aus Figur 1 hervorgeht. An diesem Abschnitt befindet sich der (nicht dargestellte) Rückspiegel. An das Ende des unteren Schenkels des C-förmigen Abschnitts, d.h. der Spiegelstange schließt sich der Handlauf 4 an, dessen Längsachse mit der zweiten Drehachse 9 zusammenfällt.

Wie dies weiter aus Figur 1 hervorgeht, sind die beiden Drehachsen 8, 9 voneinander beabstandet.

Die Multifunktionshalteteile 1 sind an der Kabine jeweils durch eine Schraubverbindung fixiert.

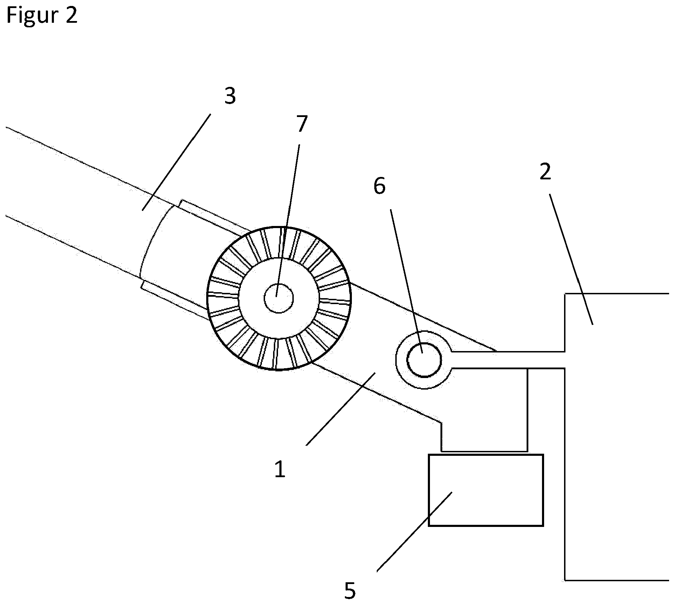

Figur 2 zeige eine Schnittansicht durch die obere Scharnieranordnung. Mit dem Bezugszeichen 1 ist das Multifunktionshalteteil gekennzeichnet, das mit dem Kabinenprofil 5 verbunden ist. Das Multifunktionshalteteil 1 ist nicht beweglich an der Kabine bzw. an dem Kabinenprofil 5 der Fahrerkabine der Arbeitsmaschine fixiert.

Das Multifunktionshalteteil 1 weist eine erste Bohrung auf, durch die sich der Türbolzen 6 erstreckt. Der Türbolzen 6 ist in der Bohrung aufgenommen, und wird auf seinen über die Bohrung überstehenden Enden jeweils von einem zylindrischen Abschnitt des Türlagers umfasst, das mit der Tür fest verbunden ist. Das Türlager und somit die Tür 2 sind somit um den Bolzen 6 verschwenkbar. Der Bolzen kann drehbar oder fest in der ersten Bohrung aufgenommen sein.

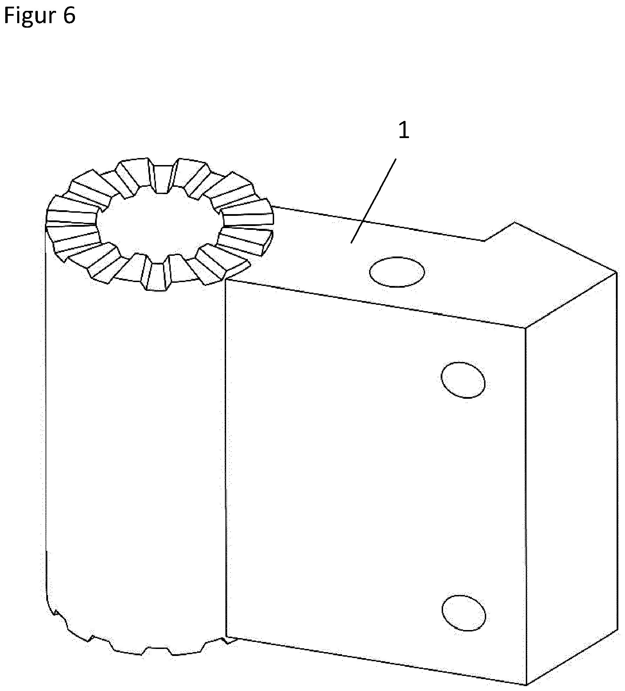

Das Multifunktionshalteteil 1 weist einen ersten Abschnitt auf, der mit dem Kabinenprofil 5 verbunden ist und einen zweiten Abschnitt, der im Winkel zu dem ersten Abschnitt verläuft und in dem sich die erste und die zweite Scharnieranordnung befindet. Dies ergibt sich unter anderem aus der perspektivischen Ansicht des Multifunktionshalteteils 1 gemäß Figur 6.

Wie dies weiter aus Figur 2 hervorgeht, befindet sich in dem Multifunktionshalteteil 1 beabstandet von der ersten Bohrung eine zweite Bohrung, in dem der Spiegelstangenbolzen 7 angeordnet ist.

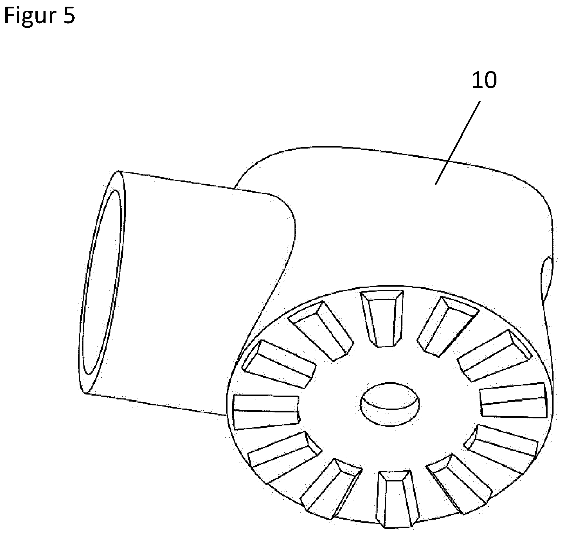

Aus Figur 2 ergibt sich weiter, dass die zweite Bohrung oben von einem Rastprofil umgeben ist, das beispielsweise sägezahnartig ausgebildet ist. Dieses Rastprofil wirkt mit dem in Figur 5 gezeigten Rastprofil des Anbindungsteils 10 der Spiegelstange im Sinne einer Rastverbindung zusammen. Die zweite Bohrung ist auch auf der Unterseite des Multifunktionshalteteils 1 von einem Rastprofil umgeben.

Das Anbindungsteil 10 weist eine in Figur 5 unten dargestellte Bohrung auf, durch die der Spielgestangenbolzen 7 verläuft sowie eine in Figur 5 links dargestellte Öffnung, in die das Ende des oberen Schenkels der C-förmigen Spiegelstange 3 eingesetzt wird. Figur 2 zeigt den Zustand mit eingesetzter Spiegelstange 3, Figur 5 zeigt das Anbindungsteil 10 ohne Spiegelstange.

Die Bolzen bzw. Stangen 6, 7 bilden die Drehachsen 8 und 9. Diese sind jeweils am oben an der Kabine angeordneten Multifunktionshalteteil und am unten an der Kabine angeordneten Multifunktionshalteteil miteinander fluchtend angeordnet.

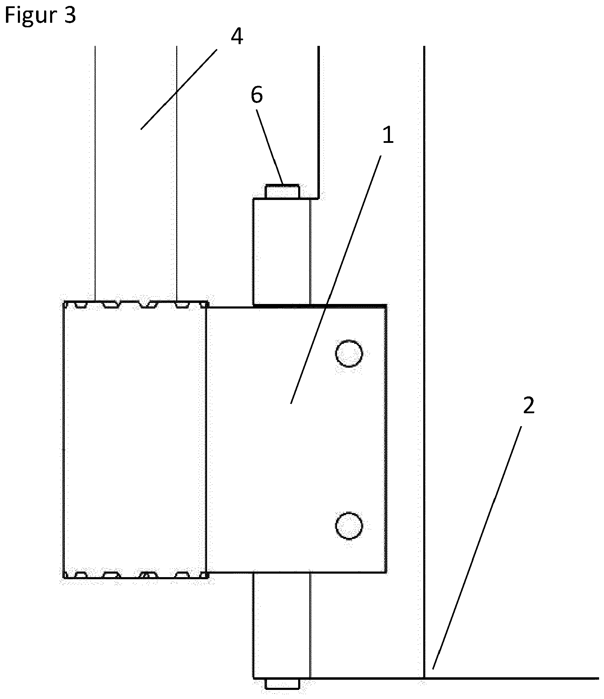

Figur 3 zeiget eine Seitenansicht des unten an der Kabine angeordneten Multifunktionshalteteils 1. Wie auch bei dem oben angeordneten Multifunktionshalteteil 1 sind in dem unteren Multifunktionshalteteil 1 zwei Bohrungen angeordnet, wobei sich in der ersten Bohrung der Türbolzen 6 erstreckt und in der zweiten Bohrung das untere Ende des Handlaufs 4, der drehbar in dem unteren Multifunktionshalteteil 1 angeordnet ist.

Wie dies weiter aus Figur 3 hervorgeht, weist auch das unten an der Kabine angeordnete Multifunktionshalteteil 1 eine Verrastung auf, allerdings wirkt diese nicht mit einer Rastung des Handlaufs 4 zusammen, wenngleich auch eine Ausführung denkbar ist, bei der sich im Bereich des unteren Endes des Handlaufs 4 eine Rastung befindet.

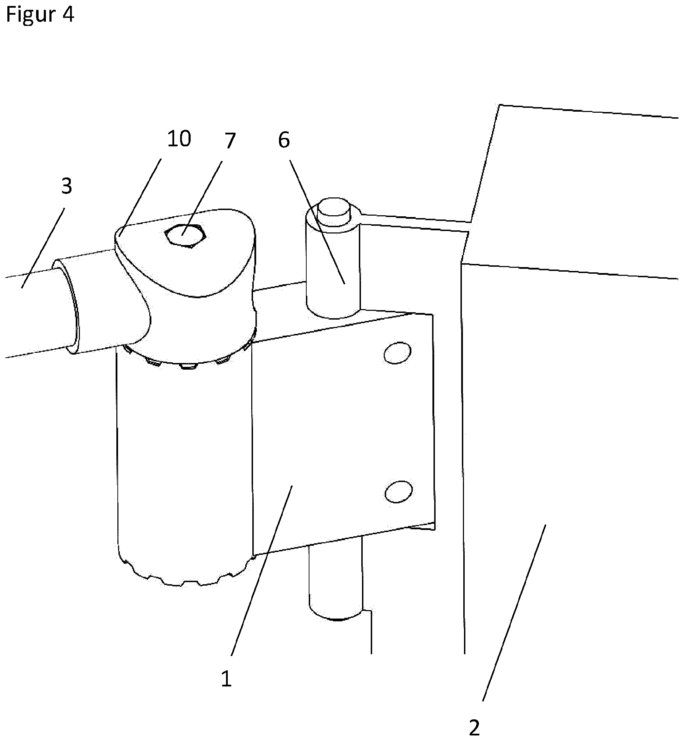

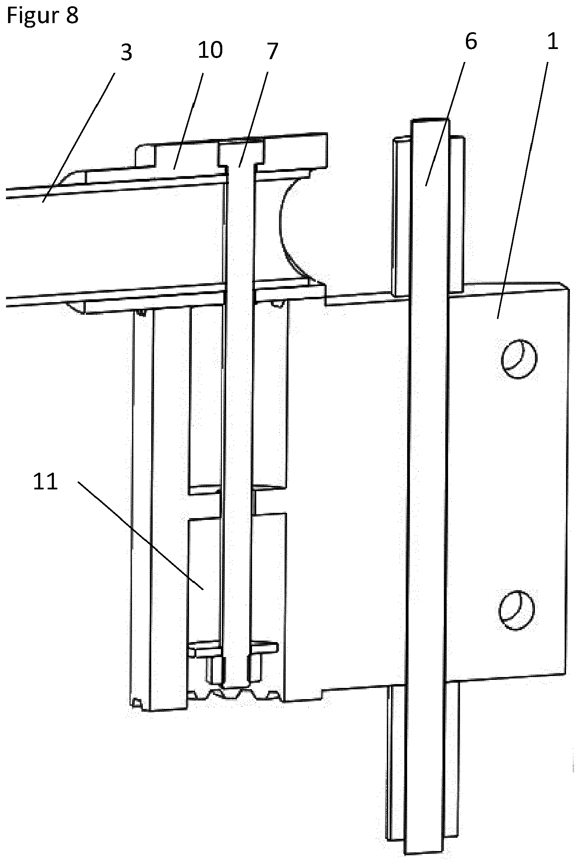

Figur 4 zeigt in einer perspektivischen Ansicht das oben angeordnete Multifunktionshalteteil 1 mit dem Anbindungsteil 10, das mittels des Spiegelstangenbolzens 7 auf die obere Rastung des Multifunktionshalteteils 1 gepresst wird. Die Einstellung der Anpresskraft erfolgt mittels der in Figur 8 gezeigten Anordnung des Spiegelstangenbolzens in dem Multifunktionshalteteil 1.

Die zweite Bohrung des Multifunktionshalteteils 1 weist einen flanschartigen Zwischensteg auf, der seinerseits eine Bohrung aufweist, die kleiner ist als die Bohrung des Multifunktionshalteteils 1 und die nur geringfügig größer ist als der Außendurchmesser des Spiegelstangenbolzens 7. Der Zwischensteg unterteilt die zweite Bohrung in zwei Kammern.

Im unteren Endbereich weist der Spiegelstangenbolzen 7 einen Verstellflansch auf, der ein Innengewinde aufweist, das mit einem Außengewinde des Spiegelstangenbolzens zusammenwirkt. Zwischen diesem Flansch und dem Zwischensteg befindet sich eine Feder 11, die auf Druck beansprucht wird und somit auf das Anbindungsteil 10 eine nach unten wirkende Kraft ausübt. Je nachdem, wie weit der Verstellflansch auf den Spiegelstangenbolzen 7 aufgeschraubt wird, ergibt sich eine kleinere oder größere Druckkraft. Somit ist die Kraft einstellbar, mit der das Anbindungsteil 10 und somit dessen Rastung auf die Rastung des Multifunktionshalteteils 1 gedrückt wird. Auf diese Weise ist damit die Kraft einstellbar, die nötig ist, um die Spiegelstange 3 relativ zu dem Multifunktionshalteteil 1 zu verschwenken.

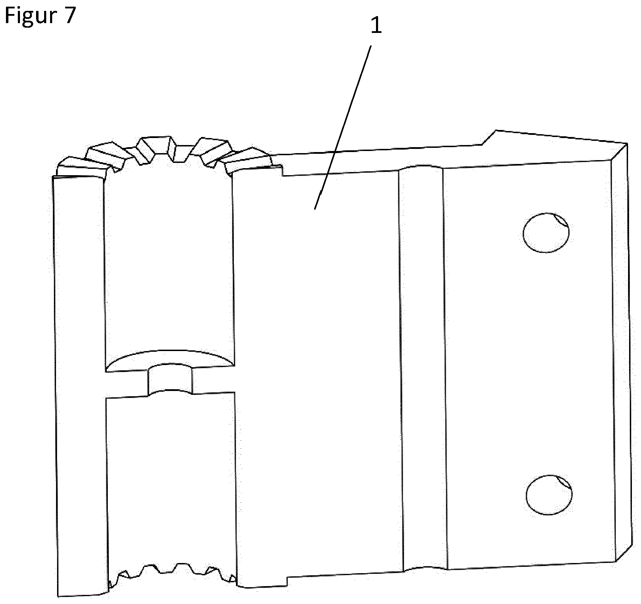

Wie dies aus Figur 8 und aus der Schnittansicht gemäß Figur 7 hervorgeht, befindet sich oberhalb und unterhalb des Zwischenstegs ein Aufnahmeraum für eine Feder, so dass das Multifunktionshalteteil 1 sowohl rechts als auch links an der Kabine fixierbar ist.

Gemäß einer bevorzugten Ausführungsform wird somit ein Multifunktionshalteteil zur Aufnahme der Drehachse der Tür sowie der kombinierten Stange (Spiegelstange und Handlauf) bereitgestellt. Diese kombinierte Stange besteht im oberen Bereich aus einer gebogenen Spiegelstange in C Form und einem im unteren Bereich vertikal verlaufenden Handlauf.

Um die Stabilität von Handlauf und Spiegel zu gewährleisten werden zwei Kabinenanschraubpunkte (oben/unten) für die Multifunktionshalteteile vorgesehen. Diese Multifunktionshalteteile beinhalten die Aufnahme des Türbolzens als Türachse, sowie der Spiegel-/Handlaufstange als abgesetzte Spiegelachse. Der Spiegel kann konventionell an der Spiegelstange befestigt werden.

Eigenschaften einer bevorzugten Ausführung sind:
- Reduzierung der A-Säule der Kabine zu Gunsten der Sicht (= weniger Befestigungsplatz)
- Multifunktionshalteteil mit einer Anbindung an den Kabinenstahlbau und Aufnahme von mehreren Scharnieren (freischwebend über den neu geschaffenen Glasbereich).
- Proportionen und Kräfte zum Multifunktionshalteteil sowie Anordnung betreffender Scharniere im Bauteil → Formgebung und Dimensionierung der Materialien und Proportionen.
- Am/an Multifunktionshalteteil(en) wird horizontal beabstandet Türanlenkung sowie kombinierte Spiegelstange (d.h. Spiegelstange und Handlauf) befestigt. Diese kombinierte Spiegelstange ist erst durch eine betreffende Norm möglich, da der Handlauf im unteren Bereich von der Höhe begrenzt sein kann.
- Einrichtung von Türachse und Spiegelachse in der Montage (Verweis auf Drehhebetüre, Verspannungen bei Betätigung (vgl. DE 10 2016 004 247 A1)).
- Die Spiegelstange wird drehbar im Multifunktionsbauteil eingebaut, was beispielsweise zur Reinigung der Frontscheibe notwendig ist.
- Spiegelstange muss gegen ungewollte Bewegung gesichert werden (wie z.B. durch eine Sägezahneinrastung mit Federpressung im Multifunktionshalteteil oder Arretierung über eine mit einem Hebel spannbarer Schraubverbindung). Grundsätzlich kann auch auf eine Verrastung bzw. auf eine Sägezahneinrastung verzichtet werden. Denkbar ist auch eine beliebige andere Fixierung der Spiegelstange, wie z.B. eine Verschraubung in der gewünschten Position.
- Kombinierte Spiegelstange ist an zwei Punkten mit den Multifunktionshalteteilen verbunden, in einer oberen und unteren Position, dies bedeutet höhere Stabilität.
- Zusätzlich kann die Bewegung der Spiegelstange durch zwei Anschläge begrenzt werden. Die Extrempositionen sind z.B. Positionen im Fahrbetrieb bei vorher schon eingestellten Spiegeln und drehbare Position um die Frontscheibe der Kabine reinigen zu können.
- Die Türöffnung kann über eine Torsionsfeder im Bereich der Türanlenkung einfach im oder am Multifunktionshalteteil angeordnet sein. Die anfällige Gasfeder (Funktionsabbau während der Lebensdauer) kann entfallen.

Vorteile bzw. Einsparung einer bevorzugten Ausführungsform sind:
- Weniger Bauteile / Montagepunkte (keine Anbindung von Spiegel bzw. Spiegelstange und Haltestange unmittelbar an der Kabine oder der Kabinentür).
- Das Multifunktionshalteteil bringt nur eine einzige Anbindung an der Kabine (mehr Sicht, vereinfachte Türkonstruktion, weniger Anbauteile).
- Einfache Herstellung des Multifunktionshalteteils, Anbindung mehrerer Bauteile (aufbauend auf das bestehende Scharnierbauteil).
- Multifunktionshalteteil kann bei Türeinbau rechts oder links an der Kabine verwendet werden. Es kann in diesem Fall das Multifunktionshalteteil verkehrt eingebaut werden und auch der Spiegelstangenbolzen verkehrt eingebaut werden.
- Gemeinsame Spiegelstange und Halterung mit erhöhter Stabilität durch Anbindungen an zwei abstehenden Multifunktionshalteteilen, nicht am Kabinenstahlbau. Daraus ergibt sich eine Reduzierung im Material- und Montageaufwand.
- Keine minimierenden Faktoren, reduzierte ROPS Bauteilschwächung durch reduzierte Anbindungsstellen.
- Einfache Türöffnung durch Torsionsfeder im Türdrehpunkt des Multifunktionshalteteils ohne Gasfeder und dessen Kabinenanbindung.
- Vereinheitlichung des oberen und unteren Anschlagpunktes (symmetrisches Bauteil beidseitig verbaubar in einem Bauteil).

## Patentansprüche

1. Arbeitsmaschine mit einer Fahrerkabine, die eine Kabinentür aufweist, die um ein Türscharnier schwenkbar angeordnet ist, wobei an der Fahrerkabine unmittelbar oder mittelbar eine Spiegelstange mit einem Spiegel und/oder ein Handlauf angeordnet ist, **dadurch gekennzeichnet, dass** an der Fahrerkabine des Weiteren ein Multifunktionshalteteil angeordnet ist,
das eine erste Scharnieranordnung aufweist, die eine erste Drehachse definiert, wobei die Kabinentür mittels der ersten Scharnieranordnung verschwenkbar ist und
das eine zweite Scharnieranordnung aufweist, die eine zweite Drehachse definiert, wobei die Spiegelstange mittels der zweiten Scharnieranordnung verschwenkbar ist und/oder dass an dem Multifunktionshalteteil der Handlauf angeordnet ist.

2. Arbeitsmaschine nach Anspruch 1, **dadurch gekennzeichnet, dass** der Handlauf und die Spiegelstange ein gemeinsames Teil bilden, das um die zweite Drehachse verschwenkbar ist.

3. Arbeitsmaschine nach Anspruch 1 oder 2, **dadurch gekennzeichnet, dass** die Spiegelstange einen C-förmigen Abschnitt aufweist, dessen offene Seite zu der Fahrerkabine hin gewandt ist.

4. Arbeitsmaschine nach Anspruch 3, **dadurch gekennzeichnet, dass** der Handlauf bis zu einer bestimmten Höhe der Kabinentür, vorzugsweise bis mindestens zu einer Normhöhe der Kabinentür reicht und dann in die weiter oben verlaufende Spiegelstange übergeht.

5. Arbeitsmaschine nach einem der vorhergehenden Ansprüche, **dadurch gekennzeichnet, dass** an der Fahrerkabine ein erstes und ein zweites Multifunktionshalteteil angeordnet sind, die in Höhenrichtung voneinander beabstandet sind, die beide eine erste Scharnieranordnung aufweisen sowie eine zweite Scharnieranordnung und/oder die beide den Handlauf halten.

6. Arbeitsmaschine nach einem der vorhergehenden Ansprüche, **dadurch gekennzeichnet, dass** die erste Drehachse und die zweite Drehachse zueinander parallel verlaufen und voneinander beabstandet sind.

7. Arbeitsmaschine nach einem der vorhergehenden Ansprüche, **dadurch gekennzeichnet, dass** das Multifunktionshalteteil eine erste Rastung und die Spiegelstange eine zweite Rastung aufweisen, die ineinander eingreifen, wobei vorzugsweise vorgesehen ist, dass die Rastung als Sägezahn-Verzahnung ausgebildet ist.

8. Arbeitsmaschine nach Anspruch 7, **dadurch gekennzeichnet, dass** eine Feder mit einer Gegenverschraubung vorgesehen ist, die derart angeordnet und ausgebildet ist, dass der Widerstand, um den die zweite relativ zu der ersten Rastung bewegbar ist verstellbar ist.

9. Arbeitsmaschine nach einem der vorhergehenden Ansprüche, **dadurch gekennzeichnet, dass** ein Anschlag vorgesehen ist, der angeordnet ist, um die Verstellung der Spiegelstange zu begrenzen.

10. Arbeitsmaschine nach einem der vorhergehenden Ansprüche, **dadurch gekennzeichnet, dass** in dem oder an dem Multifunktionshalteteil eine Feder, insbesondere eine Torsionsfeder angeordnet ist, um nach einer Entriegelung der Kabinentür diese in den geöffneten Zustand zu überführen.
